# EUROPEAN PATENT APPLICATION

(11) **EP 3 361 607 A1**
(43) Date of publication of application: **15.08.2018**
(21) Application number: 18156021.0
(22) Date of filing: 09.02.2018
(51) Int. Cl.: H02K 7/16, H02K 11/33, H02K 5/22, H02K 3/52

(54) **MOTOR**

(30) Priority: 10.02.2017 JP 2017023491
(71) Applicant: Nidec Corporation, Kyoto-shi, Kyoto 601-8205 (JP)
(72) Inventor: ISHIDA, Ryosuke, Kyoto-shi, Kyoto 601-8205 (JP); MOMEN, Kenta, Kyoto-shi, Kyoto 601-8205 (JP)
(74) Representative: Stöckeler, Ferdinand

(57) **Abstract**

A motor includes a bearing holder (4) for holding a bearing that rotatably supports a rotary shaft extending in the vertical direction, a bracket (5) for holding the bearing holder, a circuit board (7) having electronic components mounted thereon, and board fixing portions (6, 54, 55) for fixing the circuit board to the bracket. The circuit board (7) has a first region representing part of a mounting surface having the electronic components mounted thereon in the circumferential direction and a second region representing a region of the mounting surface other than the first region. The total weight of the electronic components mounted in the first region is greater than that in the second region. The number of the board fixing portions that fix the circuit board in the first region is greater than the number of the board fixing portions that fix the circuit board in the second region.

## Description

### Field of the Invention

The present invention relates to a motor.

A motor has a substrate attached thereto. The substrate has, for example, a power conversion circuit mounted thereon. The power conversion circuit converts power supplied from a power source into a direct current. For example, in the motor described in Japanese Unexamined Utility Model Registration Application Publication No. 4-12777, a support piece is provided on an end plate attached to an end portion of a stator core. An engaging claw of the supporting piece engages with a notch in the outer periphery of a printed circuit board. In this manner, the printed circuit board is secured.

In general, a relatively large and heavy electronic component, such as an electrolytic capacitor, may be mounted on the circuit board as described above.

### SUMMARY OF THE INVENTION

However, in the electric motor described in Japanese Unexamined Utility Model Registration Application Publication No. 4-12777, the sizes and arrangement of the electronic components mounted on the printed circuit board and, in addition, the resonance of the electric motor and the like are not taken into consideration. Consequently, the reliability against the vibration of the electric motor is not sufficient.

According to the present invention, an exemplary motor includes a bearing holder for holding a bearing that supports a rotary shaft extending in the vertical direction for rotation, a bracket for holding the bearing holder, a circuit board having electronic components mounted thereon, and a plurality of board fixing portions for fixing the circuit board to the bracket. The circuit board has a first region representing part of a mounting surface having the electronic components mounted thereon in the circumferential direction and a second region representing a region of the mounting surface other than the first region. The total weight of the electronic components mounted in the first region is greater than the total weight of the electronic components mounted in the second region. The number of the board fixing portions that fix the circuit board in the first region is greater than the number of the board fixing portions that fix the circuit board in the second region.

The exemplary motor according to the present invention can reduce or prevent resonance of the motor due to vibration of the circuit board.

The above and other elements, features, steps, characteristics and advantages of the present discloser will become more apparent from the following detailed description of the preferred embodiments with reference to the attached drawings.

### BRIEF DESCRIPTION OF THE DRAWINGS

Fig. 1 is a longitudinal sectional view illustrating an example of the configuration of an air blowing device using a motor;
Fig. 2 is a top perspective view of the air blowing device;
Fig. 3 is a top perspective view of the air blowing device with an impeller removed;
Fig. 4 is a bottom perspective view of the air blowing device;
Fig. 5 is a bottom perspective view of the air blowing device with a circuit board removed;
Fig. 6 is a top view of the air blowing device;
Fig. 7 is a bottom view of the air blowing device;
Fig. 8 is a bottom view of the air blowing device with the circuit board removed;
Fig. 9 is a bottom perspective view of an insulator;
Fig. 10 is a bottom view of the insulator;
Fig. 11 is an enlarged top view illustrating an example of the structure in which the first protrusions and the second protrusions are in contact with a support member; and
Fig. 12 is a longitudinal sectional view illustrating an example of the configuration of a dryer having the air blowing device mounted therein.

### DETAILED DESCRIPTION OF THE PREFERRED EMBODIMENTS

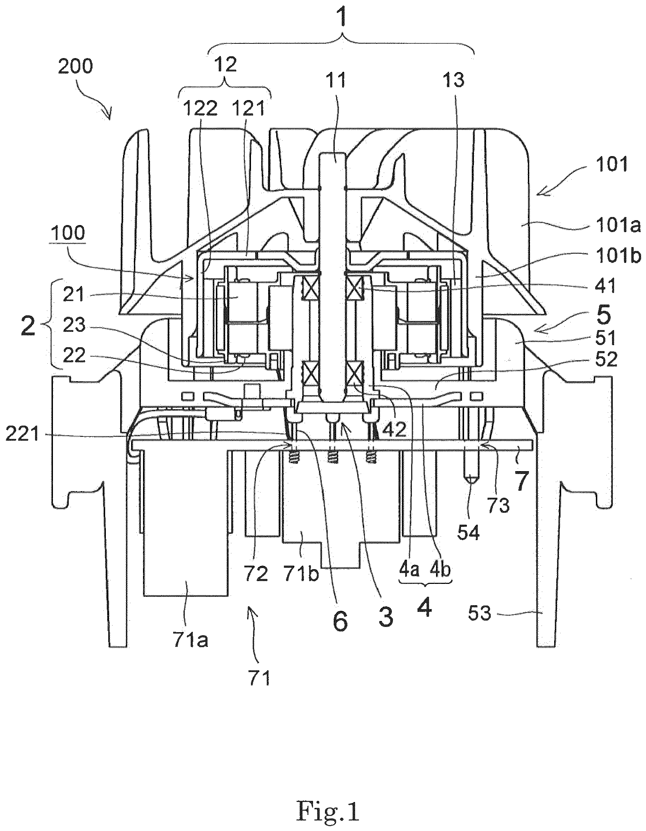

Exemplary embodiments of the present invention are described below with reference to the accompanying drawings. As used herein, in regard to a motor 100, the direction in which the rotary shaft of a rotor 1 (refer to a shaft 11 in Fig. 1 described below) extends is simply referred to as an "axial direction". In addition, in the axial direction, the direction extending from a circuit board 7 to an impeller 101 is simply referred to as an "upward" direction, and the direction extending from the impeller 101 to the circuit board 7 is simply referred to as a "downward" direction. Furthermore, a surface of each of constituent elements that faces upward in the axial direction is referred to as an "upper surface", and a surface that faces downward in the axial direction is referred to as a "lower surface".

The radial direction of the shaft 11 is simply referred to as a "radial direction", and the circumferential direction around the shaft 11 is simply referred to as "circumferential direction". In addition, in the radial direction, the direction extending towards the shaft 11 is simply referred to as an "inward" direction, and the direction extending away from the shaft 11 is simply referred to as an "outward" direction. Furthermore, among the surfaces of each of the constituent elements, the side surface facing in the inward radial direction is referred to as an "inside surface", and the side surface facing in the outward radial direction is referred to as an "outside surface".

In regard to an apparatus or a device including the motor 100, the direction of the air flow sent out by an air blowing device 200 is referred to as "air flow direction". In addition, in the air flow direction, the direction from the upstream to downstream is simply referred to as a "forward" direction, and the direction from the downstream to upstream is simply referred to as a "backward" direction.

Note that the directions and surfaces mentioned and defined above do not indicate the positional relationship and the directions when the constituent elements are incorporated into an actual device.

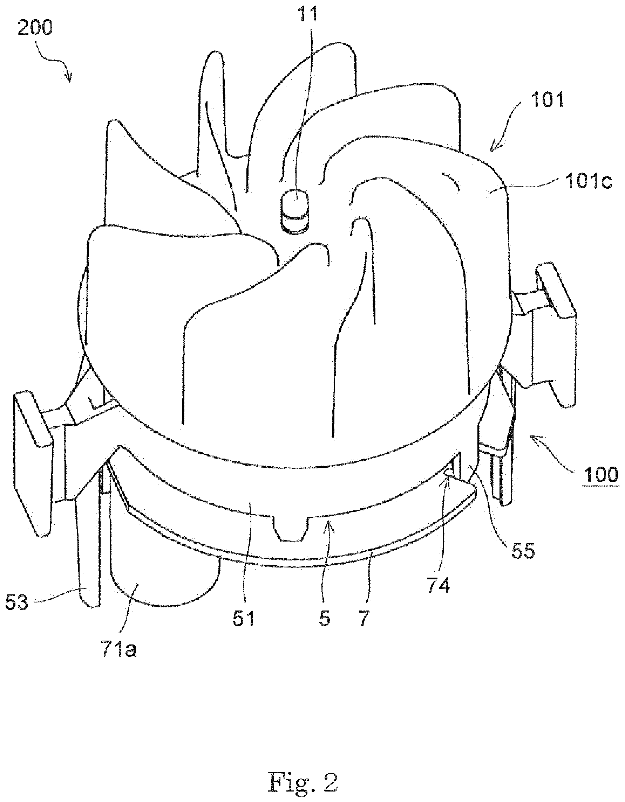

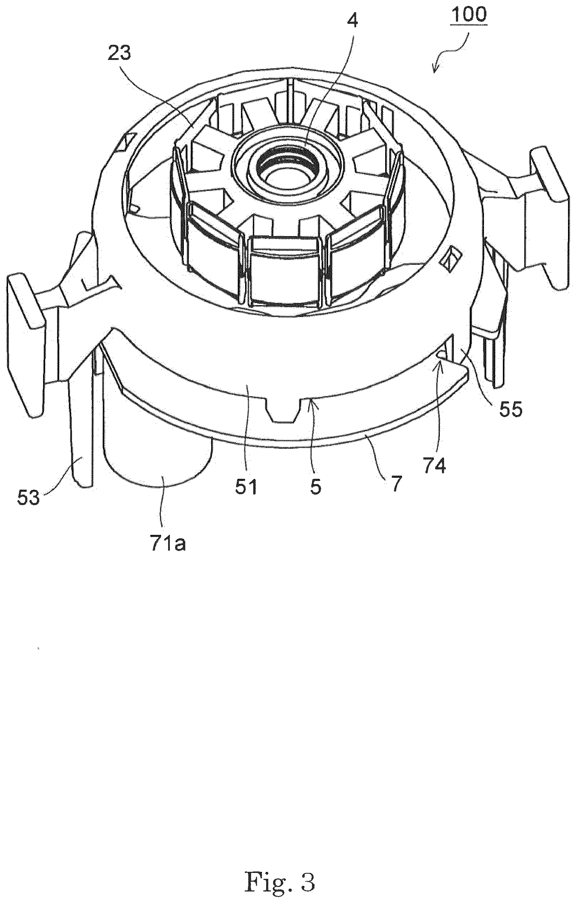

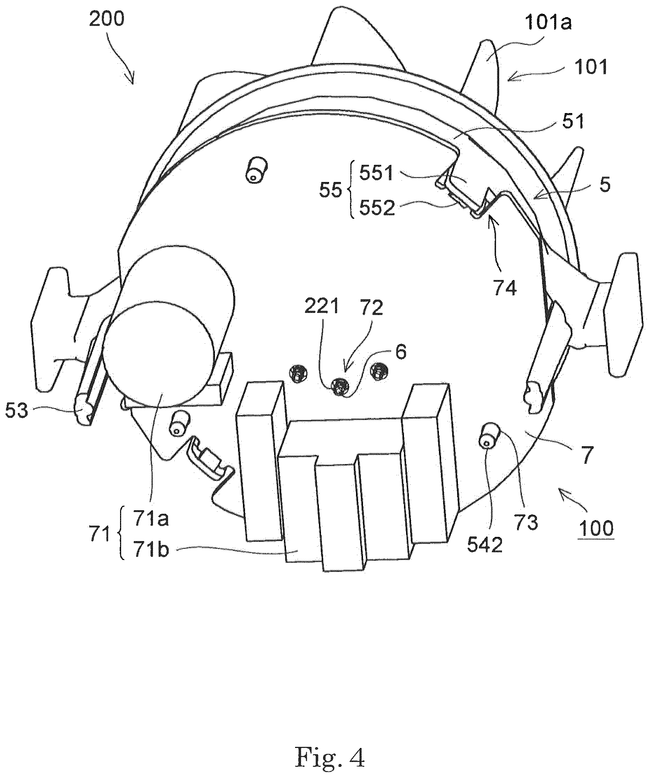

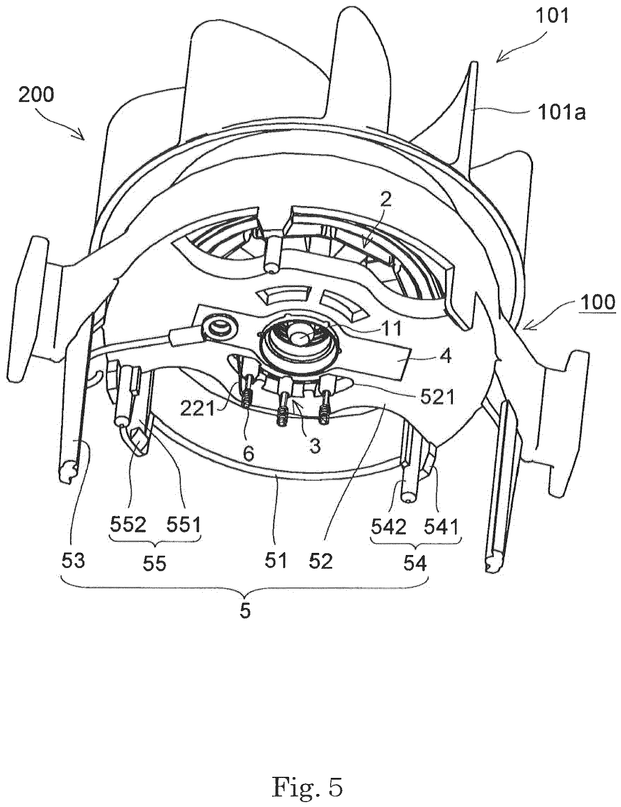

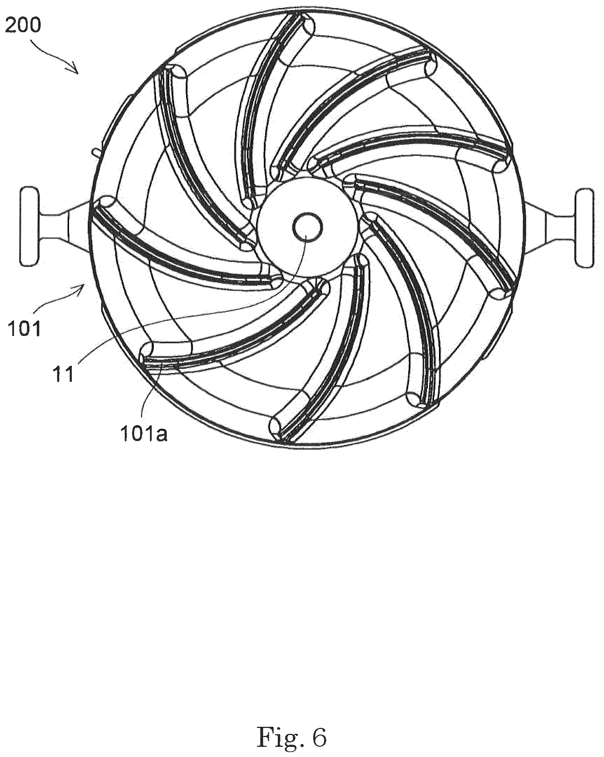

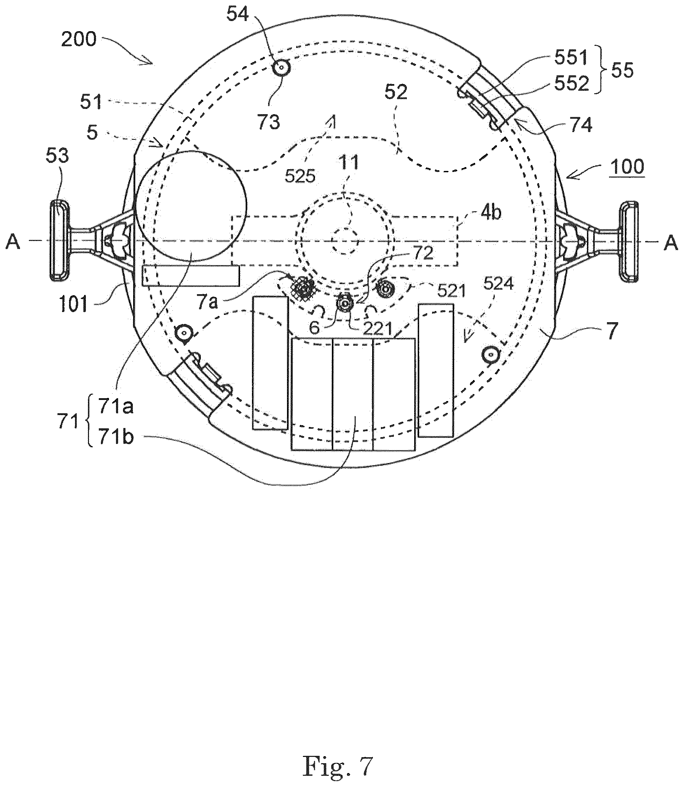

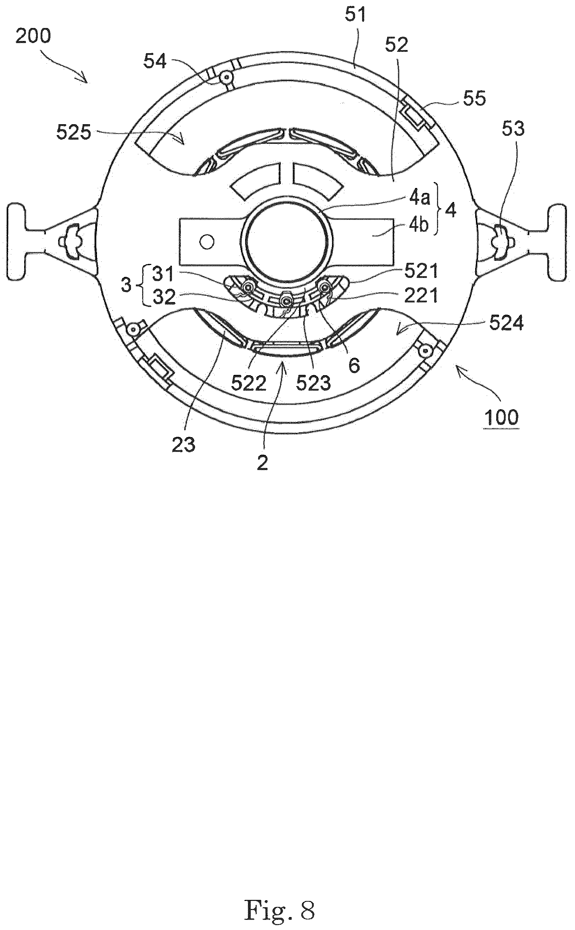

Fig. 1 is a longitudinal sectional view illustrating an example of the configuration of the air blowing device 200 using the motor 100. Fig. 2 is a top perspective view of the air blowing device 200. Fig. 3 is a top perspective view of an air blowing device 200 with the impeller 101 removed. Fig. 4 is a bottom perspective view of the air blowing device 200. Fig. 5 is a bottom perspective view of the air blowing device 200 with a circuit board 7 removed. Fig. 6 is a top view of the air blowing device 200. Fig. 7 is a bottom view of the air blowing device 200. Fig. 8 is a bottom view of the air blowing device 200 with the circuit board 7 removed. Note that Fig. 1 illustrates a cross-sectional structure taken along a dashed dotted line A - A in Fig. 7.

According to the present embodiment, as illustrated in Fig. 1, the air blowing device 200 includes the motor 100 of an outer rotor type and the impeller 101. The impeller 101 is a vane wheel attached to an upper portion of the motor 100. The impeller 101 includes a plurality of vane members 101a and a peripheral wall member 101b. The impeller 101 is driven for rotation about the shaft 11 by the motor 100 to generate an air flow.

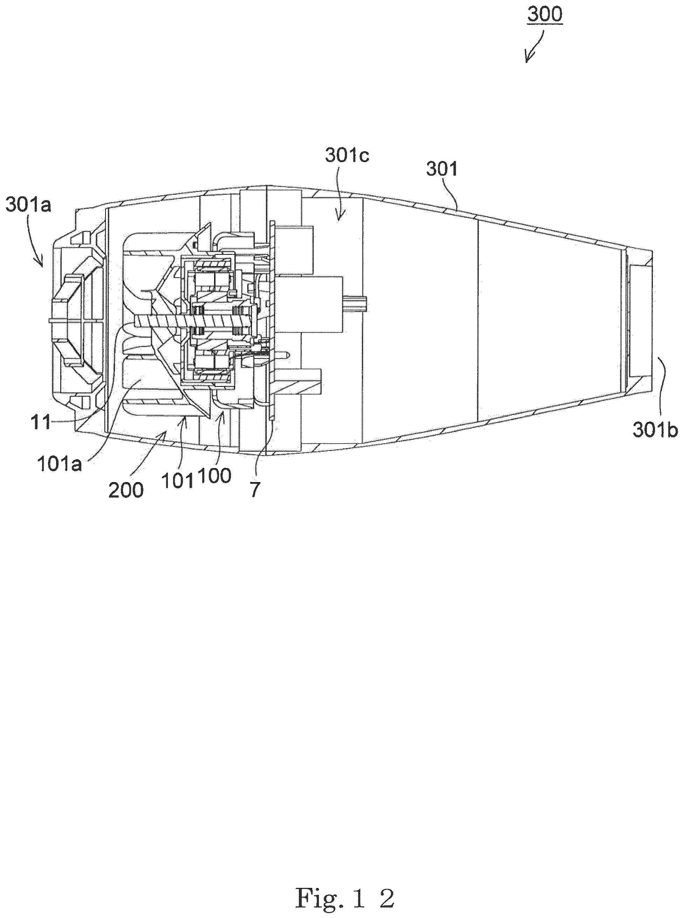

The motor 100 is a drive unit that rotationally drives the impeller 101. The motor 100 is mounted in electrical equipment, such as a dryer 300 (refer to Fig. 12 described below). The motor 100 does not include a position detection sensor, such as a Hall IC. Accordingly, the position (that is, the rotation angle) of the rotor 1 is detected by a position detection circuit described below. If such a sensorless configuration is employed, the need for a circuit board having a Hall IC mounted thereon can be eliminated in the bracket 5 of the motor 100, for example. Thus, the size of the bracket 5 can be reduced. The position detection circuit is mounted on the circuit board 7 having electronic components 71, such as an electrolytic capacitor 71a and a choke coil 71b, mounted thereon. The electronic components 71 are described in more detail below. In other words, according to the present embodiment, the number of circuit boards 7 is one. That is, no circuit boards other than the circuit board 7 having the electronic components 71, such as the electrolytic capacitor 71a and the choke coil 71b, mounted thereon are provided. Thus, the size of the motor 100 can be reduced.

As illustrated in Fig. 1, the motor 100 includes the rotor 1, a stator 2, a bearing holder 4, a bracket 5, a wire wrapping pin 6, the circuit board 7 having the electronic components 71 mounted thereon, and a plurality of board fixing portions. The plurality of board fixing portions fix the circuit board 7 to the bracket 5. The structures of the plurality of board fixing portions are described in more detail below.

The rotor 1 is the rotor of the motor 100. The rotor 1 has the shaft 11, a rotor holder 12, and a magnet 13. The shaft 11 is a rotary shaft extending in both upward and downward axial directions. The rotor holder 12 is a member that holds the magnet 13 and is rotatable together with the shaft 11 and the impeller 101. The magnet 13 faces the stator 2.

The rotor holder 12 accommodates the rotor 1, the stator 2, and the bearing holder 4. The rotor holder 12 has a plate portion 121 and a cylindrical portion 122. The plate portion 121 is a disk-shaped member extending in an outward radial direction. The cylindrical portion 122 is a cylindrical member extending from the circumferential edge of the plate portion 121 in the axially downward direction. The peripheral wall member 101b of the impeller 101 is attached to the cylindrical portion 122 so as to be located radially outwardly of the cylindrical portion 122. The magnet 13 is held on the inside surface of the cylindrical portion 122.

The stator 2 is an armature of the motor 100. The stator 2 is held on the outside surface of the bearing holder 4. The stator 2 faces the rotor 1 and drives the rotor 1. The stator 2 includes a stator core 21, a plurality of coil portions 22, and an insulator 23.

The stator core 21 is a laminated steel plate in which electromagnetic steel plates are stacked in the axial direction. The stator core 21 is provided radially outwardly of the bearing holder 4 and radially inwardly of the magnet 13.

As illustrated in Fig. 5, each of the coil portions 22 is a wire wound member in which a conductor wire (for example, a lead wire 221) is wound around the insulator 23. The coil portions 22 are arranged in the circumferential direction. An end portion of the lead wire 221 is tied to the wire wrapping pin 6 with the insulating layer peeled off. Note that the wire wrapping pin 6 is a terminal for electrically connecting the coil portion 22 with the circuit board 7.

The insulator 23 is an insulating member made of, for example, a resin material. The insulator 23 covers the stator core 21. The insulator 23 electrically insulates the stator core 21 from the coil portion 22. In addition, the insulator 23 has a support member 3 for supporting the wire wrapping pin 6. The support member 3 protrudes from the lower end of the insulator 23 toward the circuit board 7. The support member 3 has terminal supporting portion 31 and a connection portion 32. The terminal supporting portion 31 supports one of the wire wrapping pins 6. The connection portion 32 connects the adjacent terminal supporting portions 31 with each other (refer to, for example, Fig. 8). The structure of the support member 3 is described in more detail below.

The bearing holder 4 is a metal bearing holding portion for holding the bearings 41 and 42. The bearing holder 4 is provided radially outward of the shaft 11 and radially inward of the stator 2. The bearings 41 and 42 are bearings which support the shaft 11 for rotation. For example, ball bearings or sleeve bearings are used as the bearings 41 and 42.

The bearing holder 4 has a cylindrical portion 4a extending in the axial direction and a rectangular plate portion 4b. The bearings 41 and 42 are held inside the cylindrical portion 4a. The plate portion 4b extends radially outward from the lower circumference of the cylindrical portion 4a. In the axial direction, the position of the lower surface of part of the plate portion 4b close to the cylindrical portion 4a is the same as the position of the lower surface of the bracket 5. In addition, the upper surface and the lower surface of both end portions of the plate portion 4b in the long direction are clamped by the bracket 5. In this way, the bearing holder 4 is held by the bracket 5. According to the present embodiment, the plate portion 4b and the cylindrical portion 4a are separate members, but may be a single member. That is, the plate portion 4b may extend radially outward from the lower end of the cylindrical portion 4a.

The bracket 5 holds the bearing holder 4. As illustrated in Fig. 5, for example, the bracket 5 includes a cylindrical member 51, a holding member 52 for holding the bearing holder 4, a pair of motor fixing members 53 for fixing the motor 100, three board supporting portions 54, and two hook members 55. In addition, as described below, the bracket 5 has three openings 521, 524, and 525 (refer to, for example, Fig. 7). Hereinafter, the opening 521 is referred to as a connection opening 521. The two openings 524 and 525 are referred to as the "bracket openings 524 and 525".

The cylindrical member 51 is provided radially outwardly of the rotor holder 12 and the peripheral wall member 101b of the impeller 101. The cylindrical member 51 accommodates the lower portions of the stator 2 and the bearing holder 4. The pair of motor fixing members 53 is provided on the outside surface of the cylindrical member 51. In addition, the three board supporting portions 54 and the two hook members 55 are provided at the lower end of the cylindrical member 51 in the axial direction (refer to, for example, Fig. 4).

The holding member 52 holds the plate portion 4b. The holding member 52 has a portion extending in the long direction and a portion extending in the short direction. According to the present embodiment, the holding member 52 is a rectangular plate member. However, the holding member 52 is not limited to this example. The holding member 52 may have another shape, such as an oval shape. In a plan view as viewed from the axial direction, both ends in the long direction of the holding member 52 are joined to the cylindrical member 51 at two points where the pair of motor fixing members 53 are joined to the cylindrical member 51. Thus, two bracket openings 524 and 525 are formed in the holding member 52 between the cylindrical member 51 and the holding member 52 in the short direction of the holding member 52.

In the plan view as viewed from the axial direction, the long direction of the holding member 52 is parallel to, for example, a line segment extending between the middle of a portion of the circumferential edge of the lower end of the cylindrical member 51 to which one of the motor fixing members 53 is joined and the middle of a portion to which the other motor fixing member 53 is joined. That is, in the plan view as viewed from the axial direction, both ends in the long direction of the holding member 52 are respectively joined to the cylindrical member 51 at the above-mentioned two points. Since the holding member 52 is joined to the cylindrical member 51 at the above-mentioned two points at which the vibration of the motor 100 is easily transferred, the vibration of the motor 100 can be efficiently transferred to electrical equipment. In this manner, the eigenvalue (the vibration frequency) generated in the bracket 5 can be reduced. In addition, the mounting strength of the motor 100 attached to the electrical equipment can be increased.

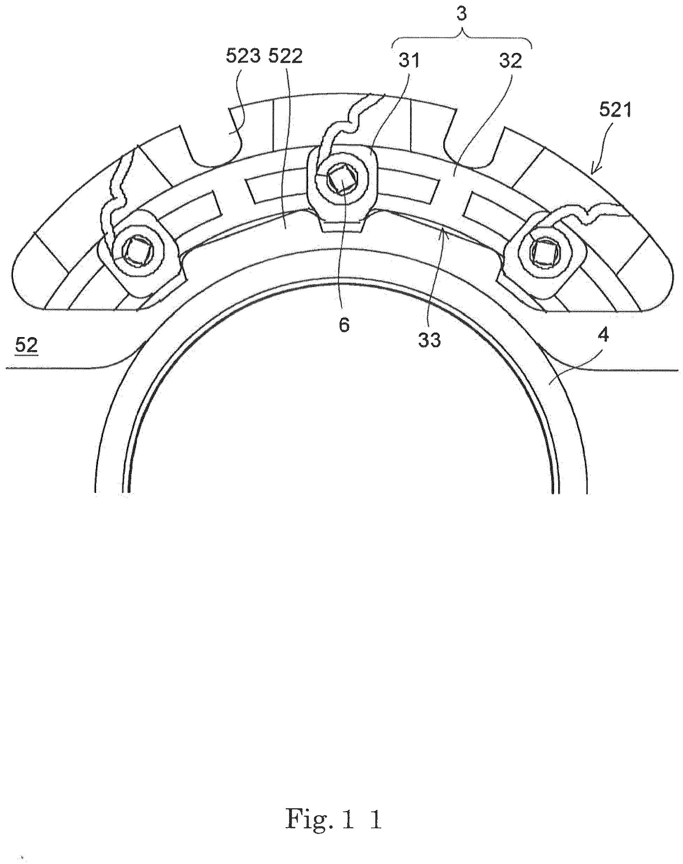

As illustrated in Fig. 8, the holding member 52 has the connection opening 521, two first protrusions 522, and two second protrusions 523. The connection opening 521 penetrates the holding member 52 from the upper surface to the lower surface. The first protrusions 522 and the second protrusions 523 are provided on the peripheral edge of the connection opening 521 (refer to Fig. 11 described below). The structure of the first protrusion 522 and the second protrusion 523 is described in more detail below.

The pair of motor fixing members 53 is attached to the electrical equipment having the air blowing device 200 mounted thereon (for example, the dryer 300 described below). When the pair of motor fixing members 53 is attached, the motor 100 is fixed to the electrical equipment. In a plan view as viewed from the axial direction, the two motor fixing members 53 are respectively joined to the cylindrical member 51 at two points of the circumferential edge of the lower end of the cylindrical member 51, where the two points are across from each other with the shaft 11 therebetween.

The board supporting portions 54 are provided on the circumferential edge of the lower end of the cylindrical member 51. Each of the board supporting portions 54 has a stopper portion 541 and a pillar portion 542 (refer to Fig. 5). The stopper portion 541 protrudes from the circumferential edge of the lower end of the cylindrical member 51 in the downward axial direction. The pillar portion 542 is provided radially inwardly of the stopper portion 541 and on the inside surface of the cylindrical member 51. The pillar portion 542 protrudes in the downward axial direction beyond the lower end of the stopper portion 541. Note that the board supporting portion 54 is one of a plurality of board fixing portions. The structure of the board fixing portions is also described in more detail below.

The hook members 55 are provided on the circumferential edge of the lower end of the cylindrical member 51. Each of the hook members 55 has an extension portion 551 and a claw portion 552 (refer to Fig. 5). The extension portion 551 extends from the bracket 5 to the circuit board 7. The claw portion 552 protrudes from the extension portion 551 toward the circuit board 7. More specifically, the extension portion 551 extends from the circumferential edge of the lower end of the cylindrical member 51 toward the circuit board 7 in the downward axial direction. The claw portion 552 protrudes from the inside surface of the extension portion 551 toward the circuit board 7 in the inward radial direction. Note that the hook member 55 is one of the plurality of board fixing portions. The structure of the board fixing portion is also described in more detail below.

The bracket 5 is formed by injection molding using a resin material, for example. The holding member 52, the cylindrical member 51, the motor fixing member 53, the board supporting portion 54, and the hook member 55 are parts of the bracket 5. That is, the holding member 52 is the same resin member as the cylindrical member 51, the motor fixing member 53, the board supporting portion 54, and the hook member 55. The holding member 52 is provided around the plate portion 4b (in particular, both end portions in the long direction) of the bearing holder 4. Consequently, the number of parts and the assembling steps can be reduced more than in the case where the holding member 52 is a member different from the cylindrical member 51, the motor fixing member 53, the board supporting portion 54, and the hook member 55. As a result, the manufacturing cost can also be reduced.

The circuit board 7 is, for example, a disk-shaped board made of a resin material, such as epoxy. The circuit board 7 is fixed to the bracket 5 at a position away from the holding member 52 in the downward axial direction. In this manner, for example, the need for providing a circuit board having electronic components mounted thereon between the stator 2 and the bracket 5 is eliminated. As a result, the size of the motor 100 can be reduced.

As illustrated in Fig. 7, for example, the circuit board 7 has three first holes 72, three second holes 73, and two notches 74. The first holes 72 and the second holes 73 are through-holes penetrating from the upper surface to the lower surface of the circuit board 7. The notches 74 are formed at two positions on the circumferential edge of the circuit board 7. In a plan view as viewed from the axial direction, the two notches 74 are across from each other with the shaft 11 therebetween. When the motor 100 is assembled, each of the wire wrapping pins 6 is inserted into one of the first holes 72 and passes through the first hole 72. Thereafter, the wire wrapping pin 6 is soldered to the circuit board 7 so as to be electrically connected to the circuit board 7. In addition, each of the board supporting portions 54 of the bracket 5 is press-fitted into one of the second holes 73. Each of the hook members 55 of the bracket 5 is attached to one of the notches 74 in a so-called snap-fit manner. The circuit board 7 is fixed to the bracket 5 by the press fitting structure of the board supporting portion 54, the snap-fit structure of the hook member 55, and the soldering structure of the wire wrapping pin 6. The structures by which the circuit board 7 is fixed to the bracket 5 are described in more detail below.

As illustrated in Fig. 4, the electronic components 71 are mounted on the circuit board 7. According to the present embodiment, the mounting surface on which the electronic components 71 are mounted is at least the lower surface of both surfaces of the circuit board 7. The mounting distribution of the electronic components 71 on the mounting surface is described below.

The electronic components 71 include circuits not illustrated in Fig. 4, that is, an AC/DC converter, an inverter, a control circuit, a position detection circuit, and the like. The AC/DC converter is a conversion circuit for converting AC power supplied from, for example, a commercial power source (not illustrated) into DC power. The AC/DC converter includes, for example, relatively large and heavy elements, such as the electrolytic capacitor 71a and the choke coil 71b. The electrolytic capacitor 71a is an electric storage element that stores a relatively large amount of electrical charge. The choke coil 71b is a wire wound member having a wire wound around an iron core. The choke coil 71b functions as a noise filter for removing noise in the power supplied from the power source to the motor 100. The inverter is a power supply circuit that supplies the power to the stator 2. The inverter generates the power to be supplied by using the DC power output from the AC/DC converter. The control circuit controls driving of the motor 100.

The position detection circuit is a detection unit that detects the position (that is, the rotation angle) of the rotor 1 on the basis of the induced voltages generated in the coil portions 22 of the stator 2 due to the rotation of the rotor 1. Note that the induced voltages are voltages generated in the coil portions 22 by the magnetic force of the magnet 13 when the rotor 1 rotates. For example, the position detection circuit detects the induced voltage generated in each of the coil portions 22 and detects the zero cross of the detected voltage. That is, the position detection circuit further detects the time at which the detected voltage exceeds 0 [V] and the tendency of the voltage increase/decrease at this time. Thereafter, the position detection circuit detects the rotation angle of the rotor 1 on the basis of the result of detection.

If the electronic components 71 described above are mounted on the lower surface of the circuit board 7, the shortest distance between the stator 2 and the circuit board 7 can be made shorter than when the electronic components 71 are mounted on the upper surface of the circuit board 7. In addition, the shortest distance between the stator 2 and the circuit board 7 is not influenced by the size of the electronic component 71 mounted on the circuit board 7 in the axial direction. As a result, even when an element having a relatively large size in, in particular, the axial direction (e.g., the electrolytic capacitor 71a used in the AC/DC converter) is mounted on the circuit board 7, the shortest distance between the stator 2 and the circuit board 7 need not be increased. In this way, the occurrence of breaking of a wire (in particular, the lead wire 221) between the stator 2 and the circuit board 7 can be reduced or prevented.

If the electronic components 71 including the AC/DC converter, the inverter, the control circuit, the position detection circuit, and the like are mounted on the same circuit board 7, the number of parts (for example, the total number of circuit boards 7) of the motor 100 can be reduced and, thus, the manufacturing cost can be reduced.

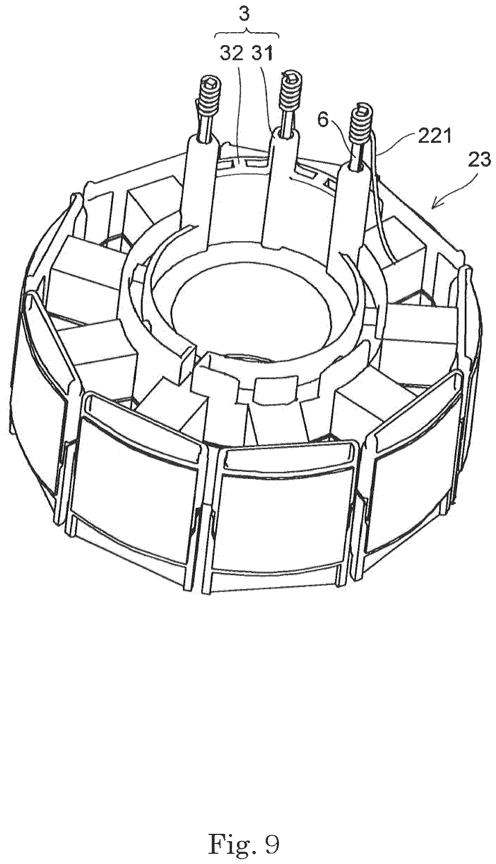

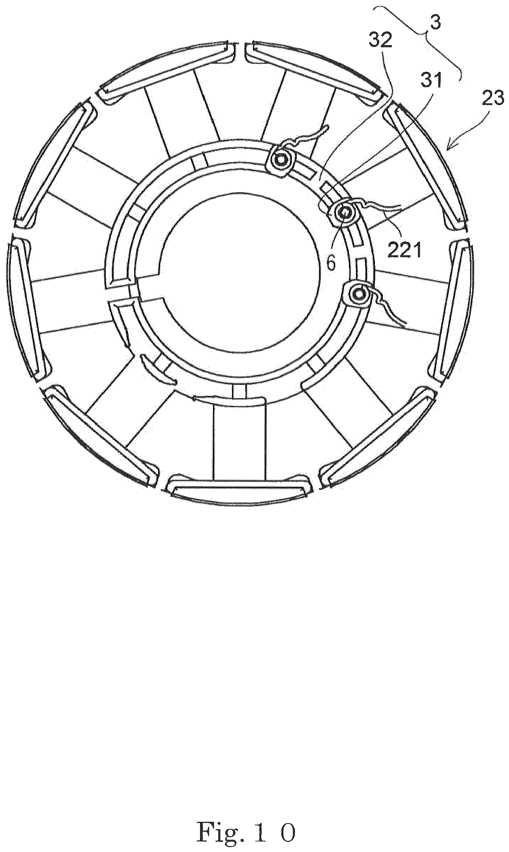

A specific structure of the support member 3 is described below. Fig. 9 is a bottom perspective view of the insulator 23. Fig. 10 is a bottom view of the insulator 23. Fig. 11 is an enlarged top view illustrating an example of the structure in which the first protrusions 522 and the second protrusions 523 are in contact with the support member 3. Note that the upward and downward axial directions in Fig. 9 differ from those in other figures. That is, the upward axial direction in Fig. 9 corresponds to the downward axial direction, and the downward axial direction in Fig. 9 corresponds to the upward axial direction.

The support member 3 is a support member for supporting the wire wrapping pins 6. The support member 3 protrudes from the lower end of the insulator 23. The wire wrapping pins 6 are stably supported by the support member 3. As a result, the occurrence of breaking of the wires (in particular, the lead wire 221) between the coil portion 22 and the circuit board 7 due to the vibration of the motor 100 can be reduced or prevented more effectively.

The support member 3 is disposed in the connection opening 521 in a plan view as viewed from the axial direction (refer to Fig. 8). The support member 3 extends through the connection opening 521 in the axial direction. The wire wrapping pins 6 extend from the top end of the support member 3 in the downward axial direction and are inserted into the first holes 72 of the circuit board 7, respectively, and are soldered to the circuit board 7. In this manner, the axial length of the support member 3 can be made relatively short. In addition, the coil portions 22 can be electrically connected to the wiring pattern of the circuit board 7 through the connection opening 521. Thus, since the lengths of the wires (in particular, the lead wire 221) between the coil portion 22 and the circuit board 7 can be reduced, the occurrence of breaking of the lead wire 221 can be reduced or prevented more effectively.

The support member 3 has three terminal supporting portions 31 and two connection portions 32. Note that the present invention is not limited to this example, and the number of the terminal supporting portions 31 may be any plural number other than three. Each of the terminal supporting portions 31 is a member for supporting the wire wrapping pin 6 and protrudes from the insulator 23 toward the circuit board 7. Each of the connection portions 32 connects the adjacent terminal supporting portions 31. In the radial direction, the radial width of the connection portion 32 is smaller than the radial width of the terminal supporting portion 31. As a result, in a plan view as viewed from the axial direction, the inside surface of the connection portion 32 forms a recess 33 together with the inside surfaces of the two adjacent terminal supporting portions 31, as illustrated in Fig. 11.

In the holding member 52, the first protrusions 522 and the second protrusions 523 are provided on the circumferential edge of the connection opening 521. The first protrusions 522 protrude from the circumferential edge of the connection opening 521 in the outward radial direction and are in contact with the support member 3. The second protrusions 523 protrude from the circumferential edge of the connection opening 521 in the outward radial direction and are in contact with the support member 3. More specifically, as illustrated in Fig. 11, in a plan view as viewed in the axial direction, the first protrusions 522 are in contact with the inside surface of the connection portion 32 (that is, the bottom surfaces of the recesses 33), and the second protrusions 523 are in contact with the outside surface of the connection portion 32.

In this manner, the displacement of the support member 3 in both the inward radial direction and outward radial direction is suppressed. Consequently, a decrease in the strength of the support member 3 due to the vibration of the motor 100 can be reduced or prevented. In addition, the vibration of the motor 100 transferred from the holding member 52 via the first protrusions 522 and the second protrusions 523 can be reduced by the connection portion 32 and, thus, the vibration is less likely to be transferred to the terminal supporting portion 31. As a result, a decrease in the strength of the wire (in particular, the lead wire 221) between the coil portion 22 and the circuit board 7 due to the vibration of the wire wrapping pins 6 can be reduced.

The holding member 52 having the first protrusions 522 and the second protrusions 523 is a resin member. Consequently, even when the first protrusions 522 and the second protrusions 523 push the support member 3 due to the vibration of the motor 100, the force that pushes the support member 3 is reduced due to the elasticity of the holding member 52 having the first protrusions 522 and the second protrusions 523. As a result, a decrease in the strength of the support member 3 due to the vibration of the motor 100 can be reduced or prevented.

Note that it is desirable that in a plan view as viewed from the axial direction, the first protrusions 522 and the second protrusions 523 be in point contact with the inside surface and the outside surface of the connection portion 32, respectively. In addition, in a plan view as viewed from the axial direction, the points of the inside surface of the connection portion 32 with which the first protrusion 522 is in contact may be single. However, it is more desirable that the points be plural. For example, in Fig. 11, each of the first protrusions 522 is in contact with the inside surface of the connection portion 32 at two points. In this way, the vibration transferred from the first protrusion 522 to the support member 3 can be further reduced. Furthermore, since the natural frequency of the support member 3 does not overlap with the vibration frequency of the motor 100, the resonance of the motor 100 can be suppressed or prevented. Still furthermore, in a plan view as viewed from the axial direction, the points of the outside surface of the connection portion 32 with which the second protrusion 523 is in contact may be single or plural.

Referring back to Fig. 7 and others, the distribution of the electronic components 71 mounted on the mounting surface of the circuit board 7 is described below. The circuit board 7 has a first region and a second region. The first region is part of the mounting surface extending in the circumferential direction. The second region is a region of the mounting surface other than the first region. According to the embodiment, various electronic components are mounted on the upper surface and the lower surface of the circuit board 7, and the electronic components 71 are mounted on the lower surface of the circuit board 7. In addition, according to the present embodiment, the first region and the second region of the circuit board 7 indicate the regions of the lower surface of the circuit board 7.

The electronic components 71 that are relatively large and heavy are mounted in the first region. According to the present embodiment, the electrolytic capacitor 71a and the choke coil 71b which are relatively large and heavy electronic components 71 are mounted in the first region. Although not illustrated in Fig. 7, electronic components 71 other than the electrolytic capacitor 71a and the choke coil 71b are also mounted in the first region.

At least part of the first region overlaps the bracket opening 524 in a plan view as viewed from the axial direction. In addition, the electronic components 71 mounted on at least part of the first region that overlaps the bracket opening 524 include the choke coil 71b. According to the present embodiment, as illustrated in Fig. 7, the part of the first region having the choke coil 71b mounted therein overlaps the bracket opening 524. The electronic components 71 mounted on the part of the circuit board 7 that overlaps the bracket opening 524 in the axial direction include a choke coil 71b. In this way, when the motor 100 is driven, it is possible to reduce the natural vibration of the circuit board 7 caused by the vibration of the electronic component 71 (the choke coil 71b in Fig. 7) mounted in the part of the region of the circuit board 7 that overlaps the bracket opening 524 in the axial direction. The reason for this is as follows. That is, in general, vibration of the motor 100 in a portion other than the circuit board 7 is relatively easily transferred to a portion of the circuit board 7 that overlaps the holding member 52 in the axial direction. In contrast, the vibration of the motor 100 in a portion other than the circuit board 7 is less likely to be transferred to the portion of the circuit board 7 that overlaps the bracket openings 524 and 525 in the axial direction. Consequently, the vibration of the motor 100 in the portion other than the circuit board 7 is less likely to be transferred to the choke coil 71b mounted in part of the region that overlaps the bracket opening 524 in the axial direction. As a result, an increase in vibration of the choke coil 71b mounted in the part of the region can be reduced or prevented.

Note that the other electronic components 71 need not be mounted in the second region. Alternatively, at least one electronic component 71 may be mounted in each of the first region and the second region. However, when electronic components 71 are mounted in each of the regions, the total weight of all the electronic components mounted in the first region is greater than the total weight of all the electronic components mounted in the second region.

According to the mounting distribution of the electronic components as described above, in the plan view as viewed from the axial direction, the center of gravity 7a of the circuit board 7 having the electronic components 71 mounted thereon is located inside of the first region. The center of gravity 7a is shifted from the shaft 11 toward the electronic components 71 on the first region, as illustrated in Fig. 7. In Fig. 7, as an example, the position of the center of gravity 7a is indicated as cross-hatching that overlaps the leftmost first hole 72. Furthermore, in a plan view as viewed from the axial direction, the center of gravity 7a is located inside an area surrounded by the board fixing portions (the board supporting portions 54, the hook members 55, and the wire wrapping pins 6 soldered in the first holes 72) arranged in the first region, the electronic components 71 mounted in the first region, and the shaft 11. As a result, the circuit board 7 is fixed by the board fixing portions at a position relatively close to the center of gravity 7a of the circuit board 7 having the electronic components 71 mounted thereon. Consequently, a force couple acting on the circuit board 7 about the center of gravity 7a of the circuit board 7 is reduced. Thus, backlash of the circuit board 7 is reduced, and the natural vibration of the circuit board 7 due to vibration of the electronic component 71 is also reduced.

The electronic components 71 having a height more than or equal to a predetermined height are mounted in the first region, and the electronic components 71 having a height less than the predetermined height are mounted in the second region. In this way, the electronic components 71 having the predetermined height or more (for example, the electrolytic capacitor 71a and the choke coil 71 b) are not mounted in the second region. Consequently, when the motor 100 is assembled, the work space is available in the second region.

The packaging density of the electronic components in the first region may be higher than the packaging density of the electronic components in the second region. If the packaging density of the electronic components 71 in the first region increases, the total weight of the electronic components 71 mounted in the first region may be greater than the total weight of the electronic components 71 mounted in the second region. Thus, the center of gravity 7a of the circuit board 7 may be shifted in a direction from the shaft 11 toward the first region. Even in such a case, the board fixing portions can fix the circuit board 7 at a position closer to the center of gravity 7a of the circuit board 7. Consequently, when the motor 100 is driven, the force couple acting on the circuit board 7 about the center of gravity 7a is reduced, and backrush of the circuit board 7 and the natural vibration of the circuit board 7 can be reduced.

The structure of the board fixing portions is described with reference to Fig. 7 and other figures. As described above, the plurality of board fixing portions include the board supporting portion 54 for providing a press-fit structure with the second hole 73, the hook member 55 for providing a snap-fit structure with the notch 74, and a soldering structure of the wire wrapping pin 6 with the circuit board 7.

The board supporting portion 54 is a second fixing member fixed to the second hole 73 of the circuit board 7. According to the present embodiment, when the circuit board 7 is fixed to the bracket 5, the board supporting portion 54 is press-fitted into the second hole 73. More specifically, the pillar portion 542 of each of the board supporting portions 54 is press-fitted into one of the second holes 73 until the upper surface of the circuit board 7 is brought into contact with the lower end of the stopper portion 541. Thus, the mounting position of the circuit board 7 relative to the bracket 5 in the axial direction is determined. Furthermore, the board supporting portion 54 fixes the circuit board 7 to the bracket 5 by the press-fit structure for press-fitting the board supporting portion 54 into the second hole 73. Note that the present invention is not limited to the above-described examples of the present embodiment. The board supporting portion 54 may be fixed to the second hole 73 by using another fixing part, such as a screw. In this case, the board supporting portion 54 has a screw hole, and the screw is fixed to the screw hole through the second hole 73. Thus, the circuit board 7 can be firmly fixed to the bracket 5. In addition to press-fitting the pillar portion 542 of the board supporting portion 54, the circuit board 7 and the bracket 5 may be fixed by crushing the pillar portion 542 against the surface of the circuit board 7.

According to the present embodiment, three board supporting portions 54 and three second holes 73 are provided. In a plan view as viewed from the axial direction, the board supporting portions 54 are provided at three positions on the circumferential edge of the lower end of the cylindrical member 51. More specifically, the board supporting portions 54 are provided at the positions that equally divide the circumferential edge of the lower end of the cylindrical member 51 into three in the circumferential direction. In a plan view as viewed from the axial direction, the second holes 73 are provided at three positions on the peripheral portion of the circuit board 7 and, in particular, are provided at the positions that substantially equally divide the peripheral portion of the circuit board 7 into three. In a plan view as viewed from the axial direction, the board supporting portions 54 fix the circuit board 7 by the press-fit structure with which the board supporting portions 54 are press-fitted into the second holes 73 at two positions in the first region. In this way, the circuit board 7 can be fixed and three-point supported by the board supporting portions 54 at positions that substantially equally divide the peripheral portion of the circuit board 7 into three in the circumferential direction. As a result, backlash of the circuit board 7 fixed by the board supporting portions 54 can be further reduced and, thus, the circuit board 7 can be more stably fixed.

In addition, at one of two positions in the first region, the board supporting portion 54 secures the circuit board 7 by using a press-fit structure in the vicinity of the snap-fit structure of the hook member 55.

The present invention is not limited to the examples of the present embodiment. The number of each of the board supporting portions 54 and the second holes 73 may be any plural number other than three. In this case, in the plan view as viewed from the axial direction, the board supporting portions 54 are provided at a plurality of positions on the circumferential edge of the lower end of the cylindrical member 51. The second holes 73 are provided at a plurality of positions on the peripheral portion of the circuit board 7. The board supporting portions 54 press-fitted into the second holes 73 fix the circuit board 7 at a plurality of positions on the peripheral portion of the circuit board 7. The first region of the mounting surface includes some of the plurality of positions. Even in such a case, at a plurality of positions in the peripheral portion of the circuit board 7, the circuit board 7 can be fixed by the press-fit structure of the board supporting portions 54. Furthermore, in a plan view as viewed from the axial direction, it is desirable that the number of press-fit structures of the board supporting portion 54 provided in the first region be greater than the number of press-fit structures of the board supporting portion 54 provided in the second region.

The hook member 55 is a first fixing member for fixing the circumferential edge of the circuit board 7. When the circuit board 7 is fixed to the bracket 5, the hook member 55 is caught by the notch 74 while pushing the outside surface of the circuit board 7. More specifically, in the notch 74, the inside surface of the extension portion 551 pushes the outside surface of the circuit board 7, and the claw portion 552 is caught by the edge portion of the notch 74. By providing such a snap-fit structure at least at two positions across from each other, the circuit board 7 is fixed to the bracket 5.

According to the present embodiment, a pair of the hook members 55 and a pair of the notches 74 are provided (that is, two hook members 55 and two notches 74 are provided). In a plan view as viewed from the axial direction, the hook members 55 are provided on the circumferential edge of the lower end of the cylindrical member 51 at two positions across from each other in the radial direction. In a plan view as viewed from the axial direction, the notches 74 are provided on the peripheral edge of the circuit board 7 at two positions across from each other in the radial direction.

In a plan view as viewed from the axial direction, one of the hook members 55 fixes the circumferential edge of the circuit board 7 at a first position within the first region by using the snap-fit structure of the notch 74. In addition, the one hook member 55 fixes the circumferential edge of the circuit board 7 in the vicinity of the electrolytic capacitor 71a and the choke coil 71b. Furthermore, the other hook member 55 fixes the circumferential edge of the circuit board 7 at a second position opposed with respect to the first position with the shaft 11 interposed therebetween by using the snap-fit structure of the notch 74.

In this way, the circumferential edge of the circuit board 7 is fixed at two positions across from each other with the shaft 11 therebetween. Consequently, it is possible to reduce a force couple acting on the circuit board 7 about the radial direction perpendicular to the line segment passing through the shaft 11 and connecting the first position with the second position. As a result, backlash and the natural vibration of the circuit board 7 can be reduced.

It should be noted that the present invention is not limited to the examples of the present embodiment. Three or more hook members 55 and three or more notches 74 may be provided. In such a case, in a plan view as viewed from the axial direction, the hook members 55 are provided at a plurality of positions on the circumferential edge of the lower end of the cylindrical member 51. The notches 74 are provided at a plurality of positions on the circumferential edge of the circuit board 7. Note that the plurality of positions at which the hook members 55 are provided include at least two positions across from each other with the shaft 11 therebetween, and the plurality of positions at which the notches 74 are provided include at least two positions across from each other with the shaft 11 therebetween. The hook members 55 snap-fitted to the respective notches 74 fix the circuit board 7 at the plurality of positions on the circumferential edge of the circuit board 7. Some of the plurality of hook members 55 fix the circumferential edge of the circuit board 7 at the first positions in the first region. The other hook members 55 fix the circumferential edge of the circuit board 7 at the second positions opposed with respect to the respective first positions with the shaft 11 interposed therebetween. In addition, in a plan view as viewed from the axial direction, it is desirable that the number of snap-fit structures provided in the first region be greater than the number of snap-fit structures provided in the second region.

The first hole 72 of the circuit board 7 is provided in the first region of the mounting surface in a plan view as viewed from the axial direction. In addition, the first holes 72 are provided in the vicinity of the electronic components 71, such as the electrolytic capacitor 71a and the choke coil 71b. When the circuit board 7 is fixed, the wire wrapping pin 6 is inserted into the first hole 72 and passes through the first hole 72. Thereafter, the wire wrapping pin 6 is soldered to the circuit board 7. By using the soldering structure of the wire wrapping pin 6, the wire wrapping pin 6 is electrically connected to a wiring portion (not illustrated) of the circuit board 7 and, in addition, the circuit board 7 is fixed to the bracket 5.

Relatively heavy electronic components 71, such as an electrolytic capacitor 71a and a choke coil 71b, are mounted in part of the first region of the mounting surface of the circuit board 7 in the circumferential direction. Accordingly, the total weight of the electronic components 71 mounted in the first region is greater than the total weight of the electronic components 71 mounted in the second region. Accordingly, the board fixing portion particularly fixes the circuit board 7 in the vicinity of the electronic components 71 mounted in the first region of the mounting surface of the circuit board 7. That is, the board fixing portion particularly fixes the circuit board 7 in the vicinity of the relatively large and heavy electronic components 71, such as the electrolytic capacitor 71a and the choke coil 17b. Accordingly, the number of board fixing portions for fixing the circuit board 7 in the first region is greater than the number of board fixing portions for fixing the circuit board 7 in the second region. For example, as illustrated in Fig. 7, in the first region, a press-fit structure formed by two board supporting portions 54, a snap-fit structure formed by one hook member 55, and a soldering structure formed by three wire wrapping pins 6 are provided in the vicinity of the choke coil 71b. In contrast, in the second region, one press-fit structure formed by the board supporting portion 54 and one snap-fit structure formed by the hook member 55 are provided.

This configuration can reduce the natural vibration of the circuit board 7 caused by vibration of the relatively heavy electronic components 71 when the motor 100 is driven. Furthermore, it is possible to prevent overlapping of the natural frequency of the circuit board 7 with the vibration frequency of the portion of the motor 100 other than the circuit board 7. As a result, the occurrence of the resonance of the motor 100 caused by the vibration of the circuit board 7 can be reduced or prevented.

In addition, in a plan view as viewed from the axial direction, the plurality of board fixing portions fix the circuit board 7 in the middle of the first region in the circumferential direction. For example, according to the present embodiment, as illustrated in Fig. 7, the press-fit structure formed by the board supporting portion 54 and the snap-fit structure formed by the hook member 55 are provided in the middle of the first region in the circumferential direction. That is, the structures are provided between the electrolytic capacitor 71a and the choke coil 71b. In addition, the structures are provided in close proximity. In this manner, a force couple acting on the circuit board 7 about the radial direction passing through the middle of the first region in the circumferential direction and the shaft 11 is reduced, and backlash and the natural vibration of the circuit board 7 can be reduced.

Furthermore, the board fixing portions fix the circuit board 7 in the vicinity of the center of gravity 7a (hatching in Fig. 7) of the circuit board 7 having the electronic components 71 mounted thereon. According to the present embodiment, as illustrated in Fig. 7, in a plan view as viewed from the axial direction, the soldering structure formed by three wire wrapping pins 6, the press-fit structure formed by one board supporting portion 54, and the snap-fit structure formed by one hook member 55 fix the circuit board 7 at the center of gravity 7a or in its vicinity. In this way, each of the circuit board fixing portions can fix the circuit board 7 at a position relatively close to the center of gravity 7a of the circuit board 7 having the electronic components 71 mounted thereon. Thus, a force couple acting on the circuit board 7 about the center of gravity of the circuit board 7 can be reduced. As a result, backlash of the circuit board 7 can be reduced and, in addition, the natural vibration of the circuit board 7 caused by vibration of the electronic components can be reduced.

Subsequently, the dryer 300 is described below. The dryer 300 is an example of application of the electrical equipment having the air blowing device 200 including the above-described motor 100 according to the present embodiment. Fig. 12 is a longitudinal sectional view illustrating an example of the configuration of the dryer 300 having the air blowing device 200 mounted therein. Note that the air blowing direction of the dryer 300 corresponds to the downward axial direction of the motor 100. The direction opposite to the air blowing direction of the dryer 300 corresponds to the upward axial direction of the motor 100.

The dryer 300 is electrical equipment for blowing out hot air. The dryer 300 rotates the impeller 101 of the air blowing device 200 by using the rotary drive of the motor 100 and sends an air flow frontward in the air blowing direction. The dryer 300 heats the air flow sent in the forward air blowing direction with a heater and discharges the heated air flow (that is, hot air) to the outside. The dryer 300 is used as, for example, a hairdryer for home or business use that dries hair. However, the dryer according to the present disclosure may be a dryer for drying or heating something other than hair, such as an industrial dryer.

As illustrated in Fig. 12, the dryer 300 includes the air blowing device 200 having the motor 100, a dryer housing 301, a flow rectifier member (not illustrated), and a heater (not illustrated).

The dryer housing 301 is a casing of the dryer 300. The dryer housing 301 includes an air inlet 301a, an air outlet 301b, and an internal space 301c. The air inlet 301a is disposed in a rear portion of the dryer housing 301 in the air blowing direction. The air outlet 301b is provided in a front portion of the dryer housing 301 in the air blowing direction. The air inlet 301a and the air outlet 301b communicate with the internal space 301c of the dryer housing 301. The air blowing device 200 using the motor 100, the flow rectifier member, and the heater are disposed in the internal space 301c.

The impeller 101 of the air blowing device 200 is disposed in the rear portion in the air blowing direction, and the motor 100 is disposed in the front portion in the air blowing direction. The axial direction of the air blowing device 200 is parallel to the air blowing direction of the dryer 300. The upward axial direction corresponds to a direction opposite to the air blowing direction. The downward axial direction corresponds to the air blowing direction.

The flow rectifier member has a plurality of stator vanes (not illustrated) arranged in the circumferential direction of the motor. Each of the stator vanes is provided radially outward of the motor 100, that is, between the motor 100 and the dryer housing 301.

The heater is provided between the air blowing device 200 and the air outlet 301b. The heater is a heating member for heating an air flow. The heater has a heating wire, such as a nichrome wire, which generates heat by passing an electric current therethrough.

When the power switch (not illustrated) of the dryer 300 is switched on, the air blowing device 200 is activated. By rotation of the impeller 101, the air blowing device 200 generates an air flow flowing from the outside of the dryer housing 301 into the internal space 301c through the air inlet 301a. The air flow flowing into the internal space 301c is sent from the air blowing device 200 in the outward radial direction by the rotation of the impeller 101. The air flow is guided to between the plurality of stator vanes by the inner surface of the internal space 301c and is sent toward the heater. The air flow flowing around the heater is heated by the heater. Thereafter, the heated air flow is blown out from the air outlet 301b.

The embodiments of the present invention have been described above. It should be noted that the scope of the present disclosure is not limited to the above-described embodiments. The present disclosure can be implemented with various modifications without departing from the spirit and scope of the disclosure. Furthermore, the above-described embodiments can be combined in any way as appropriate.

In addition to the dryer (refer to Fig. 12), the present invention is applicable to other air blowing devices, such as an electric fan and a ventilation fan. Furthermore, the present invention is applicable to a small air-intake device, such as a handy cleaner, and electrical equipment for other applications, such as a hair curler.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A motor comprising:
a bearing holder (4) for holding a bearing (41, 42) that supports a rotary shaft (11) extending in the vertical direction for rotation;
a bracket (5) for holding the bearing holder (4);
a circuit board (7) having electronic components (71) mounted thereon; and
a plurality of board fixing portions (54, 55) for fixing the circuit board (7) to the bracket (5),
wherein the circuit board (7) has a first region representing part of a mounting surface having the electronic components (71) mounted thereon in the circumferential direction and a second region representing a region of the mounting surface other than the first region,
wherein the total weight of the electronic components (71) mounted in the first region is greater than the total weight of the electronic components (71) mounted in the second region, and
wherein the number of the board fixing portions (54, 55) that fix the circuit board (7) in the first region is greater than the number of the board fixing portions (54, 55) that fix the circuit board (7) in the second region.

2. The motor according to Claim 1, wherein in a plan view as viewed from the axial direction, the center of gravity of the circuit board (7) having the electronic components (71) mounted thereon is located inside of the first region and is inside an area surrounded by the board fixing portions (54, 55) disposed in the first region, the electronic components (71) mounted in the first region, and the rotary shaft (11).

3. The motor according to Claim 1 or 2, wherein the electronic components (71) having a height greater than or equal to a predetermined height are mounted in the first region, and the electronic components (71) having a height less than the predetermined height are mounted in the second region.

4. The motor according to any one of Claims 1 to 3, wherein the packaging density of the electronic components (71) in the first region is higher than the packaging density of the electronic components (71) in the second region.

5. The motor according to any one of Claims 1 to 4, wherein the plurality of board fixing portions (54, 55) fix the circuit board (7) in the middle of the first region in the circumferential direction.

6. The motor according to any one of Claims 1 to 5, wherein the plurality of board fixing portions (54, 55) include a plurality of first fixing members (55) and a second fixing member (54),
wherein the circuit board has a second hole (73) to which the second fixing member (54) is fixed, and
wherein in a plan view as viewed from the axial direction, some of the first fixing members (55) fix the circumferential edge of the circuit board (7) at first positions in the first region, and the other first fixing members (55) fix the circumferential edge of the circuit board (7) at second positions opposed with respect to the respective first positions with the rotary shaft (11) interposed therebetween.

7. The motor according to Claim 6, wherein the second fixing member (54) is inserted into the second hole (73) and fixes the circuit board (7) through a press-fit structure.

8. The motor according to Claim 7, wherein the second fixing member (54) is provided in a plurality, and the second hole (73) is provided in a plurality,
wherein in a plan view as viewed from the axial direction, the second holes (73) are formed in a peripheral portion of the circuit board (7), and the second fixing members (54) fix the circuit board (7) at a plurality of positions in the peripheral portion, and
wherein the first region includes some of the plurality of positions.

9. The motor according to Claim 8, wherein three second fixing members (54) and three second holes (73) are provided,
wherein the second fixing members (54) fix the circuit board (7) at three positions in the peripheral portion, and
wherein the three positions equally divide the peripheral portion into three in the circumferential direction.

10. The motor according to any one of Claims 1 to 9, wherein the circuit board (7) is fixed to the bracket (5) at a position lower than the bracket (5) in the axial direction, and the mounting surface is a lower surface of the circuit board (7).

11. The motor according to any one of Claims 1 to 10, further comprising:
a rotor (1) including the rotary shaft (11); and
a stator (2) for driving the rotor (1),
wherein the stator (2) includes a stator core (21), an insulator (23) that covers the stator core (21), and a coil portion (22) formed by winding a conductive wire around the insulator (23),
wherein each of the plurality of board fixing portions (54, 55) includes a support member (3) that protrudes from the insulator (23) toward the circuit board (7),
wherein in a plan view as viewed from the axial direction, the circuit board (7) has a through-hole (72) radially inward of the electronic components (71) mounted in the first region,
wherein the support member (3) supports a terminal (6) that electrically connects the coil portion with the circuit board (7) and passes through the through-hole (72), and
wherein the terminal (6) is fixed to the circuit board (7).

12. The motor according to any one of Claims 1 to 11, wherein the bearing holder (4) includes a holding cylindrical portion (4a) and a plate portion (4b), the holding cylindrical portion (4a) extends in the axial direction and holds the bearing (41, 42), and the plate portion (4b) extends radially outward from a lower end of the holding cylindrical portion (4a),
wherein the bracket (5) includes a cylindrical member (51), a holding member (52), and a bracket opening (524, 525), the cylindrical member (51) extends in the axial direction, and a holding member (52) extends radially outward from a lower end of the cylindrical member (51),
wherein the holding member (52) has a shape having a long direction and a short direction and holds the plate portion (4b),
wherein the bracket opening (524, 525) is located between the holding member (52) and the cylindrical member (51) in the short direction, and
wherein in a plan view as viewed from the axial direction, at least part of the first region overlaps the bracket opening (524, 525).

13. The motor according to Claim 12, wherein the bracket (5) further includes a pair of motor fixing members (53) for fixing the motor to electrical equipment, and
wherein in a plan view as viewed from the axial direction, the pair of motor fixing members (53) and both ends of the holding member (52) in the long direction are joined to the cylindrical member (51) at two positions that are located on the circumferential edge of the cylindrical member (51) and that are across from each other with the rotary shaft (11) therebetween.

14. The motor according to Claim 12 or 13, wherein the first region has a choke coil (71b) and an electrolytic capacitor (71a) mounted therein.
